# EUROPEAN PATENT APPLICATION

(11) **EP 1 489 454 A1**
(43) Date of publication of application: **22.12.2004**
(21) Application number: 04253541.9
(22) Date of filing: 14.06.2004
(51) Int. Cl.: G02F 1/1335, G02B 5/18, G02B 5/20

(54) **Illumination device, tablet, and liquid crystal display**

(30) Priority: 18.06.2003 JP 2003173686; 18.06.2003 JP 2003173687
(71) Applicant: ALPS ELECTRIC CO., LTD., Ota-ku Tokyo 145 (JP)
(72) Inventor: Ishitaka, Yoshihiko, c/o Alps Electric Co., Ltd., Ota-ku, Tokyo (JP); Fukuda, Tetsuya, c/o Alps Electric Co., Ltd., Ota-ku, Tokyo (JP); Naito, Koichi, c/o Alps Electric Co., Ltd., Ota-ku, Tokyo (JP); Honda, Kenji, c/o Alps Electric Co., Ltd., Ota-ku, Tokyo (JP)
(74) Representative: Kensett, John Hinton

(57) **Abstract**

A tablet (40) includes a top substrate (41) and a bottom substrate (42). Minute irregularities are provided on a bottom surface of the bottom substrate. Projections or depressions (9) constituting the minute irregularities are disposed in a staggered arrangement parallel to the direction along which light travels through the light-guide plate or along the vertical direction of a display region in the bottom substrate when viewed by a viewer. Thus, the pitch of the projections or depressions next to each other in the lateral direction is minimized when viewed by the viewer. Hence, even if 1st order reflected light occurs in the oblique direction with respect to the vertical direction of the display, the 1st order reflection of blue light with a shorter wavelength in the visible light band can be suppressed.

## Description

### BACKGROUND OF THE INVENTION

### 1. Field of the Invention

The present invention relates to illumination devices and tablets, and more particularly, to an illumination device and a tablet for a liquid crystal display that prevent colored light from being leaked in the oblique direction with respect to the display.

### 2. Description of the Related Art

Illumination devices called front lights are disposed on the front faces of reflective liquid crystal panels, which are widely used as displays for portable information terminals or cellular phones whose application is remarkably expanding these days. More specifically, a front light is disposed close to the front face of the liquid crystal panel (on the viewer side) and illuminates the liquid crystal panel from above. If necessary, a tablet serving as a data inputting device may be disposed close to the front face of the front light.

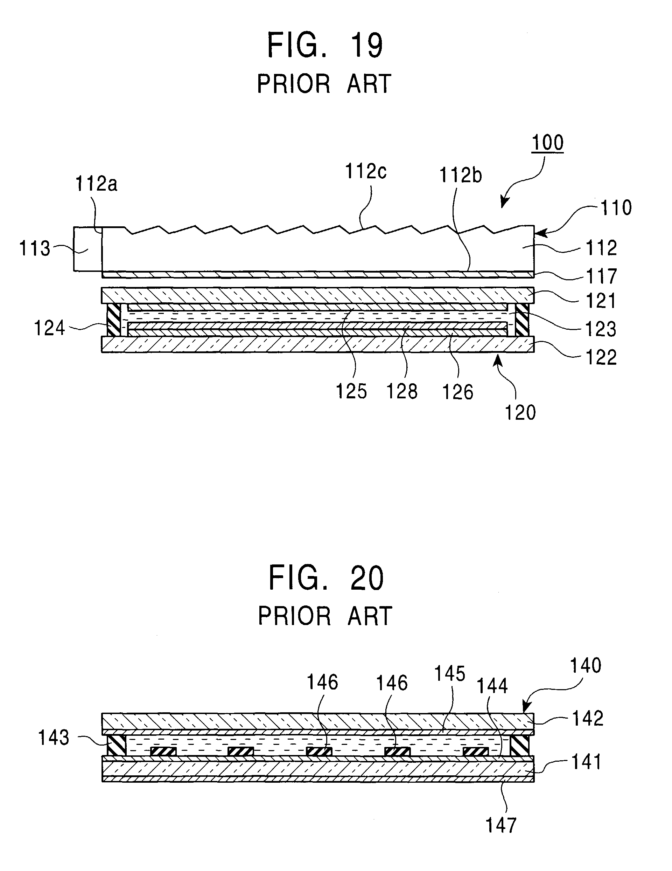

Fig. 19 is a cross-sectional view of a known liquid crystal display with a front light. A liquid crystal display 100 shown in Fig. 19 includes a liquid crystal panel 120 and a front light 110 that is disposed close to the front face of the liquid crystal panel 120. A liquid crystal layer 123 is sealed between a top substrate 121 and a bottom substrate 122 by seals 124, the top substrate 121 and the bottom substrate 122 facing each other, and is held in the liquid crystal panel 120. A liquid crystal control layer 125 is disposed on the inner surface of the top substrate 121, the liquid crystal control layer 125 having, for example, an electrode and a polarizing film. A reflective layer 126 is disposed on the inner surface of the bottom substrate 122 and a liquid crystal control layer 128 is disposed on top of this reflective layer 126. The reflective layer 126 is a metal thin film with a high reflectance and is composed of aluminum, silver or the like. The liquid crystal control layer 128 has an electrode and a polarizing film.

The front light 110 includes a flat light-guide plate 112 and a rod light source 113. The light-guide plate 112 has a side face 112a and the light source 113 is disposed on this side face 112a. The top surface of the light-guide plate 112 has a plurality of prism-shaped projections when viewed from the side, the projections including reflective faces 112c. The light source 113 emits a light beam which then passes through the side face 112a to enter the light-guide plate 112. The light beam traveling through the light-guide plate 112 is reflected by the reflective face 112c so that the direction of the light beam is changed. Then, the reflected light beam is emitted from an emitting face 112b towards the liquid crystal panel 120.

An antireflective layer 117 is disposed on the emitting face 112b of the front light 110, whereby light traveling though the light-guide plate 112 is effectively extracted toward the liquid crystal panel 120. The antireflective layer 117 prevents reflection light from the liquid crystal panel 120 from being reflected by the emitting face 112b of the light-guide plate 112 and thus being attenuated.

Fig. 20 is a cross-sectional view of a known tablet. Referring to Fig. 20, a tablet 140 includes a bottom substrate 141 and a top substrate 142 both of which have flat plate shapes and are composed of, e.g., transparent resin. Insulating patterns 143 are interposed between the bottom substrate 141 and the top substrate 142 on both outer sides thereof so that the bottom substrate 141 and the top substrate 142 are stuck to each other, with a gap therebetween. A bottom transparent conductive film 144 including wiring pattern is disposed on the inner surface of the bottom substrate 141 and a top transparent conductive film 145 including wiring pattern is disposed on the inner surface of the top substrate 142. The bottom transparent conductive film 144 and the top transparent conductive film 145 are composed of indium tin oxide (ITO), for example. Dot spacers 146 of an insulating material are disposed on the bottom transparent conductive film 144 at a predetermined distance. A space is provided between each of the dot spacers 146 and the top transparent conductive film 145. An antireflective layer 147 is disposed on the bottom surface of the bottom substrate 141. Ambient light or illumination light is incident on the top substrate 142 and passes through the top transparent conductive film 145, the bottom transparent conductive film 144, the bottom substrate 141, and the antireflective layer 147. The antireflective layer 147 prevents the light beam from being reflected when it passes therethrough. Therefore, the display on a liquid crystal panel, which is normally disposed below the tablet 140, will not be deteriorated (see Japanese Unexamined Patent Application Publication No. 2003-229013).

According to the known illumination device and tablet, the antireflective layer 117 and the antireflective layer 147 are formed by laminating SiO₂ films and TiO₂ films at a predetermined cycle through sputtering or deposition, the SiO₂ film and the TiO₂ film having different refractive indexes; or by bonding an antireflection film (AR film) having minute irregularities of submicron order. Each of the antireflective layers 117 and 147 has a predetermined thickness in order to attain 1/4λ, optical condition. Thus, the antireflective layer 117 and the antireflective layer 147 transmit light beams with a high transmittance.

The present inventors fabricated a liquid crystal display with an illumination device having the structure shown in Fig. 19, where the antireflective layer 117 had irregularities of submicron order, and conducted experiments on the illumination device. When the liquid crystal display was viewed from an oblique direction, extremely intense blue reflected light was observed and this blue light rendered the liquid crystal display bluish. The inventors also fabricated a tablet having the structure shown in Fig. 20, where the antireflective layer 147 with irregularities of submicron order was provided, and fabricated a liquid crystal display where the front light 110 and the liquid crystal panel 120 were disposed below the tablet having the structure shown in Fig. 20. With the tablet and the liquid crystal displays also, extremely intense blue reflected light was observed when the displays were viewed from the oblique direction.

The inventors believe that the occurrence of the blue reflected light is attributable to the fact that blue light with a short wavelength is generated as -1-st order reflected light by the irregularities of submicron order and this blue light can be suppressed if the size of the projections or depressions constituting the irregularities of submicron order is further reduced. The -1-st order reflected light is the light reflected in the opposite direction from the direction along which light travels. Unfortunately, for further reducing the size of the projections or depressions constituting the irregularities of submicron order for use in an AR film, very complex equipment is required, which greatly increases the manufacturing costs. In fact, however, even if projections (depressions) of a reduced size are formed, it is uncertain whether the blue -1-st order reflected light is suppressed for sure.

### SUMMARY OF THE INVENTION

It is an object of the present invention to provide an illumination device and a tablet with an antireflective layer which can suppress blue reflected light perceived when a display is viewed from an oblique direction, and to provide a liquid crystal display including the illumination device or the tablet.

According to a first aspect of the present invention, a transparent substrate has a surface having minute projections or depressions disposed in a staggered arrangement for preventing reflection of light, the transparent substrate being capable of transmitting light across the thickness thereof.

According to a second aspect of the present invention, a tablet includes a bottom substrate in which at least a display region is transparent, the bottom substrate having an inner surface and an outer surface; a top substrate in which at least a display region is transparent, the top substrate having an inner surface, the bottom substrate and the top substrate facing each other with a predetermined gap; a bottom transparent conductive film disposed on the inner surface of the bottom substrate; a top transparent conductive film disposed on the inner surface of the top substrate; and an antireflective layer having minute projections or depressions and disposed on the outer surface of the bottom substrate. The antireflective layer is capable of transmitting light across the thicknesses of the display regions of the top substrate and the bottom substrate, and the projections or depressions are disposed in a staggered arrangement along the vertical direction of the display region of the bottom substrate when the display region is viewed by a viewer.

The projections are disposed in the staggered arrangement in the vertical direction of the display. Therefore, even if -1-st order reflected light occurs in the oblique direction with respect to the vertical direction of the display, the -1-st order reflection of blue light with a shorter wavelength in the visible light band can be suppressed. This is because the pitch of the projections next to each other is minimized in the lateral direction of the display.

In the tablet according to the second aspect of the present invention, preferably, first rows consisting of the projections or depressions aligned at a predetermined pitch along the vertical direction of the display region and second rows consisting of the projections or depressions aligned at a predetermined pitch along the vertical direction of the display region are alternately disposed in the lateral direction when the display region is viewed by the viewer; the staggered arrangement is composed of the projections or depressions in the first rows and the second rows; and the smallest effective pitch is defined by the projections or depressions in the first rows and the projections or depressions in the second rows, the smallest effective pitch being smaller than the pitches at which the projections or depressions are aligned in the first rows and the second rows.

The first rows of the projections or depressions and the second rows of the projections or depressions are alternately disposed in the lateral direction and the projections or depressions are disposed in the staggered arrangement in the vertical direction of the display. Therefore, even if the - 1-st order reflected light occurs in the oblique direction with respect to the vertical direction of the display, the pitch of the projections or depressions next to each other in the lateral direction is smaller than the pitches along which the projections or depressions are aligned in the first rows and in the second rows. Hence, the -1-st order reflection of blue light with a shorter wavelength in the visible light band can be suppressed.

In the tablet according to the second aspect of the present invention, preferably, each of the pitch at which the projections or depressions are aligned in the first row and the pitch at which the projections or depressions are aligned in the second row is 0.3 µm or less. Accordingly, the smallest effective pitch defined by the projections or depressions in the first row and the second row can be smaller than 0.3 µm. Hence, the -1-st order reflection of blue light with a shorter wavelength in the visible light band can be suppressed.

Furthermore, in the tablet according to the second aspect of the present invention, preferably, the smallest effective pitch is 0.2 µm or less. Thus, the -1-st order reflection of blue light with a shorter wavelength in the visible light band can be suppressed.

According to the second aspect of the present invention, a liquid crystal display includes the tablet as described above and a liquid crystal panel disposed below the tablet.

Therefore, even when the display is viewed from an oblique direction, it is unlikely that the -1-st order colored reflected light occurs in the oblique direction. Thus, when the liquid crystal panel is viewed from the oblique direction, the display does not appear bluish.

According to a third aspect of the present invention, an illumination device includes a light source for emitting light; a light-guide plate having a side face, a reflective face, and an emitting face, the reflective face and the emitting face facing each other; and a front cover disposed closer to a viewer than the light source and the light-guide plate. In the illumination device, the light emitted from the light source is supplied to the light-guide plate through the side face, and the light traveling through the light-guide plate is reflected by the reflective face and is emitted from the emitting face. The front cover includes a plate-shaped flat transparent substrate and an antireflective layer on an entire surface of the transparent substrate, the surface being close to the light-guide plate, the antireflective layer having minute projections or depressions that are disposed in a staggered arrangement parallel to a direction along which the light travels through the light-guide plate.

The projections are disposed in the staggered arrangement parallel to the direction along which light travels through the light-guide plate so that the -1-st order blue reflected light can be suppressed when the illumination device is viewed from an oblique direction.

In the illumination device according to the third aspect of the present invention, preferably, the projections or depressions are aligned at a pitch of 0.3 µm or less and at an effective pitch of 0.15 µm or less. By this arrangement of the projections or depressions, the blue reflected light can be suppressed effectively.

According to the third aspect of the present invention, a liquid crystal display includes the illumination device as described above and a liquid crystal panel disposed below the illumination device. Therefore, this liquid crystal display exhibits high luminance and superior color reproduction.

A tablet according to a fourth aspect of the present invention includes a light source for emitting light; a light-guide plate having a side face, a reflective face, and an emitting face, the reflective face and the emitting face facing each other; a bottom substrate in which at least a display region is transparent, the bottom substrate having an inner surface and an outer surface; a top substrate in which at least a display region is transparent, the top substrate having an inner surface, the bottom substrate and the top substrate facing each other with a predetermined gap and being disposed closer to a viewer than the light source and the light-guide plate; a bottom transparent conductive film disposed on the inner surface of the bottom substrate; a top transparent conductive film disposed on the inner surface of the top substrate; and an antireflective layer having minute projections or depressions and disposed on the outer surface of the bottom substrate. The light emitted from the light source is supplied to the light-guide plate through the side face, and the light traveling through the light-guide plate is reflected by the reflective face and is emitted from the emitting face. The antireflective layer is capable of transmitting light across the thicknesses of the display regions of the top substrate and the bottom substrate, and the projections or depressions are disposed in a staggered arrangement parallel to a direction along which the light travels through the light-guide plate.

The projections are disposed in the staggered arrangement parallel to the direction along which light travels through the light-guide plate so that the -1-st order blue reflected light can be suppressed when the illumination device is viewed from an oblique direction.

In the tablet according to the fourth aspect of the present invention, the projections or depressions are aligned at a pitch of 0.3 µm or less and at an effective pitch of 0.15 µm or less. By this arrangement of the projections or depressions, the blue reflected light can be suppressed effectively.

Furthermore, according to the fourth aspect of the present invention, a liquid crystal display includes the tablet as described above and a liquid crystal panel disposed below the tablet. Therefore, this liquid crystal display exhibits high luminance and superior color reproduction.

Embodiments of the invention will now be described, by way of example only, with reference to the accompanying drawings, in which:
Fig. 1 is a cross-sectional view of a liquid crystal display including a front cover, a front light, and a liquid crystal panel according to a first embodiment of the present invention;
Fig. 2 is a perspective view of projections on an antireflective layer provided in the front cover;
Fig. 3A is a plan view of the projections disposed in a normal arrangement;
Fig. 3B is a plan view of the projections disposed in a staggered arrangement;
Fig. 4 is a cross-sectional view of a liquid crystal display including a tablet, a front light, and a liquid crystal panel according to a second embodiment of the present invention;
Fig. 5 is a graph showing the reflectance of a front cover according to example 1;
Fig. 6 is a graph showing the brightness of leaking light from a front cover according to example 2;
Fig. 7 is a graph showing the chromaticity of leaking light from the front cover according to example 2;
Fig. 8 is a graph showing the chromaticity of leaking light from a front cover according to example 3;
Fig. 9 is a graph showing the chromaticity of leaking light from a front cover according to example 4;
Fig. 10 is a graph showing the chromaticity of leaking light from a front cover including an antireflective layer of a layered known type and of the chromaticity of leaking light from a front cover including the antireflective layer with the projections according to the present invention;
Fig. 11 is a perspective view of projections on an antireflective layer provided in the tablet;
Fig. 12A is a plan view of the projections disposed in a normal arrangement;
Fig. 12B is a plan view of the projections disposed in a staggered arrangement;
Fig. 13 is a graph showing the reflectance of a bottom substrate according to example 6;
Fig. 14 is a graph showing the chromaticity of leaking light from a bottom substrate according to example 7;
Fig. 15 is a graph showing the chromaticity of leaking light from a bottom substrate according to example 8;
Fig. 16 is a graph showing the chromaticity of leaking light from a bottom substrate according to example 9;
Fig. 17 is a graph showing the chromaticity of leaking light from the bottom substrate according to example 9;
Fig. 18 is a graph showing the chromaticity of leaking light from a bottom substrate including an antireflective layer of a known layered type and the chromaticity of leaking light from a bottom substrate including the antireflective layer with the projections according to the present invention;
Fig. 19 is a cross-sectional view of a liquid crystal display including a general illumination device of a known type; and
Fig. 20 is a cross-sectional view of a general tablet of a known type.

### DESCRIPTION OF THE PREFERRED EMBODIMENTS

Embodiments of the present invention will now be described by referring to the accompanying drawings. It should be noted, however, that the present invention is not to be limited to the following embodiments.

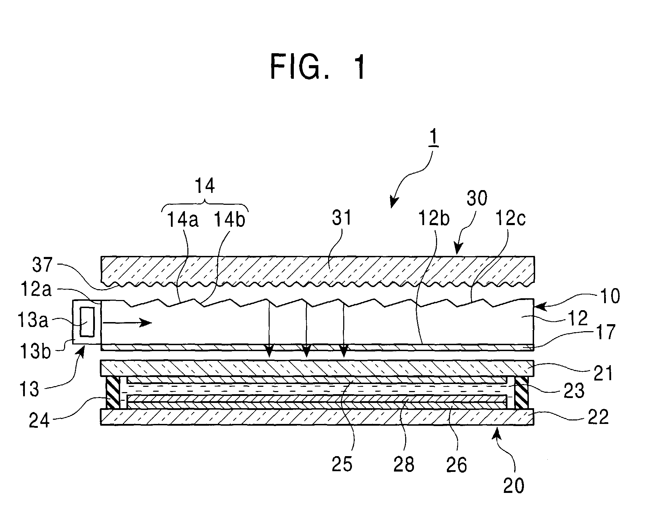

Fig. 1 is a cross-sectional view of a liquid crystal display including an illumination device of the present invention. A liquid crystal display 1 shown in Fig. 1 includes a reflective liquid crystal panel 20, a front light 10, and a front cover 30. The front light 10 is disposed in front of the front face of the liquid crystal panel 20 and the front cover 30 is disposed in front of the front face of the front light 10. A viewer is situated above the liquid crystal display 1 in Fig. 1. More specifically, the front cover 30, the front light 10, and the liquid crystal panel 20 are disposed in this order when viewed by the viewer.

Normally the peripheries of the liquid crystal display 1 are supported by a supporting member (not shown). The front cover 30, the front light 10, and the liquid crystal panel 20 are disposed with predetermined gaps therebetween.

The front light 10 includes a substantially flat transparent light-guide plate 12 with a side face or incident face 12a and a light source 13, which is disposed on the side face 12a. The light-guide plate 12 is composed of, for example, an acrylic resin or a polycarbonate resin. The bottom surface of the light-guide plate 12, which is close to the liquid crystal panel 20, constitutes an emitting face 12b from which illumination light of the front light 10 is emitted. The top surface of the front light 10, which is close to the front cover 30, is composed of a plurality of prism-shaped projections with serrated cross-section. More specifically, the projections with serrated cross-section are disposed parallel to each other. Each projection 14 has a gently inclined portion 14a that is inclined with respect to the emitting face 12b and a steeply inclined portion 14b that is steeper than the gently inclined portion 14a. An antireflective layer 17 is disposed on the emitting face 12b of the light-guide plate 12.

The rod light source 13 is provided along the side face 12a of the light-guide plate 12. The light source 13 includes a light-guide rod 13b and light-emitting elements 13a. The light-emitting elements 13a are composed of white light emitting diodes and are disposed on both sides of the light-guide rod 13b. Light emitted from the light-emitting elements 13a is supplied to the light-guide plate 12 through the light-guide rod 13b. Since the light-guide rod 13b is disposed between the light-emitting elements 13a and the light-guide plate 12, the light from the light-emitting elements 13a, which are point light sources, is uniformly emitted toward the side face 12a of the light-guide plate 12.

The light source 13 may be any C light source capable of supplying light to the side face 12a of the light-guide plate 12. For example, light-emitting elements 13a may be aligned along the side face 12a of the light-guide plate 12 or only a single light-emitting element 13a may be provided.

Preferably, the light source 13 is disposed at the top of the light-guide plate 12 or at the bottom of the light-guide plate 12 when viewed by the viewer. Therefore, the direction of light traveling through the light-guide plate 12 is parallel to the vertical direction when viewed by the viewer.

The front light 10 leads light emitted from the light source 13 into the light-guide plate 12 through the side face 12a of the light-guide plate 12. The steeply inclined portions 14b of the projections 14 provided on a reflective face 12c reflect the light beams traveling through the light-guide plate 12, and thus the direction of the light beams is changed. Then, the reflected light beams are emitted from the emitting face 12b towards the liquid crystal panel 20 as illumination light.

The front cover 30 is provided close to the front face of the front light 10. The front cover 30 includes a transparent substrate 31 and an antireflective layer 37. The antireflective layer 37 is disposed on the entire bottom surface of the front cover 30, the bottom surface being close to the front light 10. The transparent substrate 31 may be composed of any flat sheet that allows light to pass therethrough. For example, the transparent substrate 31 may be composed of plastic.

A spacer composed of, e.g., resin may be disposed in the gap between the front light 10 and the front cover 30 instead of an air layer. The spacer preferably has a refractive index similar to that of the front light 10 and/or the front cover 30.

The front cover 30 according to the present embodiment has the antireflective layer 37 on the entire bottom surface thereof. The antireflective layer 37 has minute irregularities of submicron order and projections (depressions) constituting the irregularities are disposed in a staggered arrangement. This is one of the most distinctive features of the present invention.

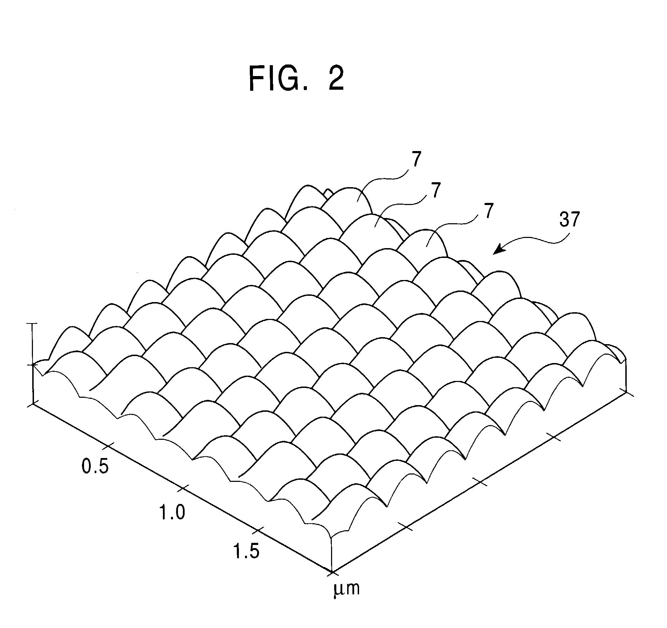

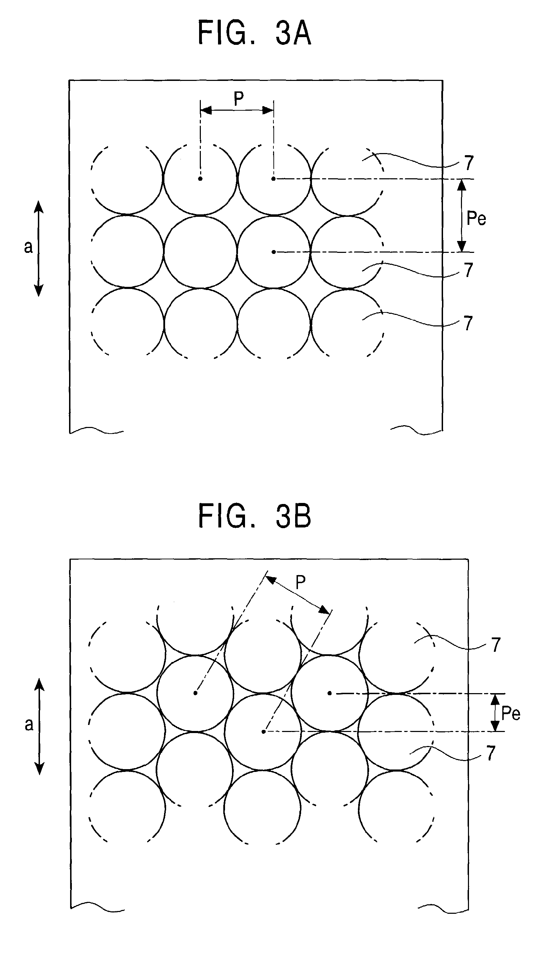

Referring to Figs. 2, 3A and 3B, the antireflective layer 37 will now be described. Fig. 2 is a perspective view of part of the surface of the antireflective layer 37. Figs. 3A and 3B are schematic plan views of the minute projections (depressions) of the antireflective layer 37. Fig. 3A shows the projections arranged in a normal arrangement. Fig. 3B shows the projections disposed in a staggered arrangement.

As shown in Fig. 2, a plurality of minute projections 7 with diameters of about 0.15-0.4 µm is disposed in a staggered arrangement on the surface of the antireflective layer 37. The antireflective layer 37 has a high transmittance for light in a wide waveband. In the present embodiment, the projections 7 protrude toward the front light 10 from the bottom surface of the transparent substrate 31. Alternatively, depressions may be formed inward on the bottom surface of the transparent substrate 31. The provision of the minute irregularities prevents reflection of incident light because the heights and pitches of the projections or depressions are smaller than the wavelengths of the visible light, according to information by Fraunhofer Gesellschaft in Germany.

According to the present invention, preferably the pitch of the projections 7 is smaller than or equal to 0.3 µm and the height of each projection 7 is 0.2 µm or higher. If the pitch exceeds 0.3 µm, light incident on the antireflective layer 37 assumes a color. If the height of the projection 7 is smaller than 0.2 µm, reflection of the incident light beam is not sufficiently prevented, resulting in the antireflective layer 37 having a high reflectance.

The transmittance of the antireflective layer 37 increases as the pitch of the projections 7 decreases. However, precise arrangement of extremely minute projections 7 of diameters smaller than 0.2 µm is difficult and requires increased costs. Therefore, in practice, the lower limit of the pitch of the projections 7 is approximately 0.2 µm.

Referring to Figs. 3A and 3B, the arrangement of the projections 7 provided over the antireflective layer 37 will now be described. According to the present embodiment, the projections 7 on the antireflective layer 37 are disposed in the staggered arrangement shown in Fig. 3B, not in the normal arrangement shown in Fig. 3A. It is necessary that the direction in which an effective pitch Pe is minimized in the staggered arrangement shown in Fig. 3B be parallel to the direction along which a light beam travels through the light-guide plate 12 of the front light 10.

The direction along which the light beam travels through the light-guide plate 12 is designated by an arrow a in Figs. 3A and 3B. When the rod light source 13 is provided at the side face 12a of the light-guide plate 12 in the front light 10 of the present embodiment, a light beam travels from the light emitting face to the opposing side face of the light-guide rod 13b (from the side face 12a to the opposing side face of the light-guide plate 12). Furthermore, when the light source 13 is provided at the top or bottom of the light-guide plate 12, a light beam travels in the vertical direction when viewed by the viewer.

Referring to Fig. 3A, the effective pitch Pe of the projections 7, i.e., the distance between the center of a projection 7 and the center of another projection 7 vertically next to the projection 7, is the same as a pitch P, i.e., the distance between the center of a projection 7 and the center of another projection 7 laterally next to the projection 7. Referring to Fig. 3B, the effective pitch Pe of the projections 7 is the distance between the center of a projection 7 and the center of another projection 7 obliquely next to the projection 7, the distance being measured in the vertical direction of the drawing. In Fig. 3B, the effective pitch Pe is one half of the pitch P.

Therefore, the effective pitch Pe of the projections 7 is smaller in the staggered arrangement shown in Fig. 3B than in the normal arrangement shown in Fig. 3A. According to the present embodiment, the direction in which the effective pitch Pe is minimized is parallel to the direction along which a light beam travels through the light-guide plate 12 so that hardly any light is reflected at the antireflective layer 37. Accordingly, when a light beam is incident on the antireflective layer 37, the -1-st order reflection of blue light with a short wavelength does not occur. Thus, degradation of color reproduction due to the blue transmitted light is prevented in the liquid crystal display 1.

In the liquid crystal display 1 of the present embodiment, the effective pitch Pe of the projections 7 in the direction along which a light beam travels through the light-guide plate 12 (the direction designated by the arrow a in Figs. 3A and 3B) is preferably 0.15 µm or smaller so that the antireflective layer 37 can effectively prevent reflections, leading to an improvement in display quality of the liquid crystal display 1. When the effective pitch Pe exceeds 0.15 µm, the effect of preventing reflections is degraded in the antireflective layer 37.

As described above, in the antireflective layer 37 provided at the front cover 30, the smallest possible pitch P of the projections 7 is approximately 0.2 µm. Therefore, the practical smallest effective pitch Pe is about 0.1 µm.

The antireflective layer 37, which is provided on the entire bottom surface of the front cover 30, prevents the phenomenon whereby the display on the liquid crystal panel 20 becomes bluish due to leakage of light in the oblique direction. That is, the antireflective layer 37 prevents the occurrence of the -1-st order reflection of blue light with a short wavelength when light travels through the light-guide plate 12.

When the liquid crystal display 1 is used in an environment where ambient light is abundant during the day, the liquid crystal panel 20 can be lit by ambient light instead of the light source 13. A beam of ambient light incident on the front cover 30 of the liquid crystal display 1 passes through the front cover 30 and the gently inclined portion 14a of the light-guide plate 12 and is emitted from the emitting face 12b towards the liquid crystal panel 20. According to the present embodiment, the antireflective layer 37 is provided over the entire bottom surface of the front cover 30. Accordingly, when a light beam from above the liquid crystal display 1 is incident on the front cover 30 and is emitted towards the liquid crystal panel 20, hardly any light is reflected and thus most of the transmitted light can reach the liquid crystal panel 20. Thus, the liquid crystal display exhibits excellent visibility.

The antireflective layer 37 may be fabricated by injection molding using a mold, for example. Minute depressions (projections) of submicron order are provided in a cavity of the mold. Injection molding is then performed using this mold, whereby the irregularities in the cavity are formed on the antireflective layer 37.

The shape of the depressions (projections) in the mold for the antireflective layer 37 is formed by patterning a wall of the mold using an electron beam lithography system and etching the resultant mold, for example. Alternatively, a stamper having depressions (projections) may be provided in the cavity of the mold. The stamper for the formation of the antireflective layer 37 is formed by known Ni electroforming. Since the antireflective layer 37 fabricated by the aforementioned method is provided over the bottom surface of the front cover 30, the front cover 30 can prevent reflection of light.

The antireflective layer 37 may be formed integrally with the transparent substrate 31 by placing the aforementioned mold having the irregularities for the antireflective layer 37 in another mold for the formation of the bottom surface of the transparent substrate 31. When the antireflective layer 37 is formed in this way, one step can be omitted so that the front cover 30 with the antireflective layer 37 can be fabricated even more effectively.

Referring to Fig. 1, in the liquid crystal panel 20, a liquid crystal layer 23 is provided between a top substrate 21 and a bottom substrate 22 that face each other. The liquid crystal layer 23 is sealed by frame-shaped seals 24 that extend from the inner surface of the top substrate 21 to the inner surface of the bottom substrate 22 on both outer sides of the top substrate 21 and the bottom substrate 22. A liquid crystal control layer 25 is disposed on the inner surface of the top substrate 21. A reflection layer 26 is disposed on the inner surface of the bottom substrate 22, the reflection layer 26 including a metal thin film for reflecting illumination light from the front light 10 or ambient light. A liquid crystal control layer 28 is disposed on top of the reflection layer 26.

Each of the liquid crystal control layers 25 and 28 includes an electrode for controlling the liquid crystal layer 23, a polarizing film, a semiconductor device for switching the electrode, and the like. The liquid crystal control layers 25 and 28 may each include a color filter for color display, if necessary.

The reflection layer 26 includes a reflective thin film composed of metal with a high reflectance, such as aluminum or silver, in order to reflect ambient light or illumination light from the front light 10 that is incident on the liquid crystal panel 20. Preferably, the reflection layer 26 includes a light scattering member for preventing degradation of visibility of the liquid crystal display due to the occurrence of intense reflected light in a particular direction. The light scattering member may be projections and depressions provided on the reflective film or may be a scattering film in which resin beads are dispersed in a resin film, the resin beads and the resin film having different refractive indexes.

According to the liquid crystal display 1 of the present embodiment constructed as described above, in an environment in which ambient light is abundant, ambient light is utilized for reflective display, whereas in an environment in which ambient light is scarce, the illumination light emitted from the emitting face 12b of the light-guide plate 12 is utilized for display.

According to the liquid crystal display 1, since the antireflective layer 37 is provided on the entire bottom surface of the front cover 30, a light beam led to the light-guide plate 12 from the light source 13 will not leak outside. Thus, the problem of the display appearing bluish when the liquid crystal display 1 is viewed from the oblique direction is avoided. Furthermore, in reflective display using ambient light, the antireflection layer 37 suppresses reflection when the ambient light from the top of the front cover 30 is emitted toward the front light 10. Accordingly, the amount of light entering the liquid crystal panel 20 is increased and thus the liquid crystal display exhibits excellent luminance.

A light beam incident on the liquid crystal panel 20 is reflected by the reflection layer 26 of the bottom substrate 22 and reenters the light-guide plate 12. Then, the light beam passes through the light-guide plate 12 towards the viewer. According to the liquid crystal display 1 of the present embodiment, since the antireflective layer 37 is provided on the entire bottom surface of the front cover 30, the reflection light from the liquid crystal panel 20 is hardly ever reflected by the bottom surface of the front cover 30 and thus most of the reflected light reaches the viewer. Therefore, the luminance of display is not degraded, leading to a bright display with high contrast.

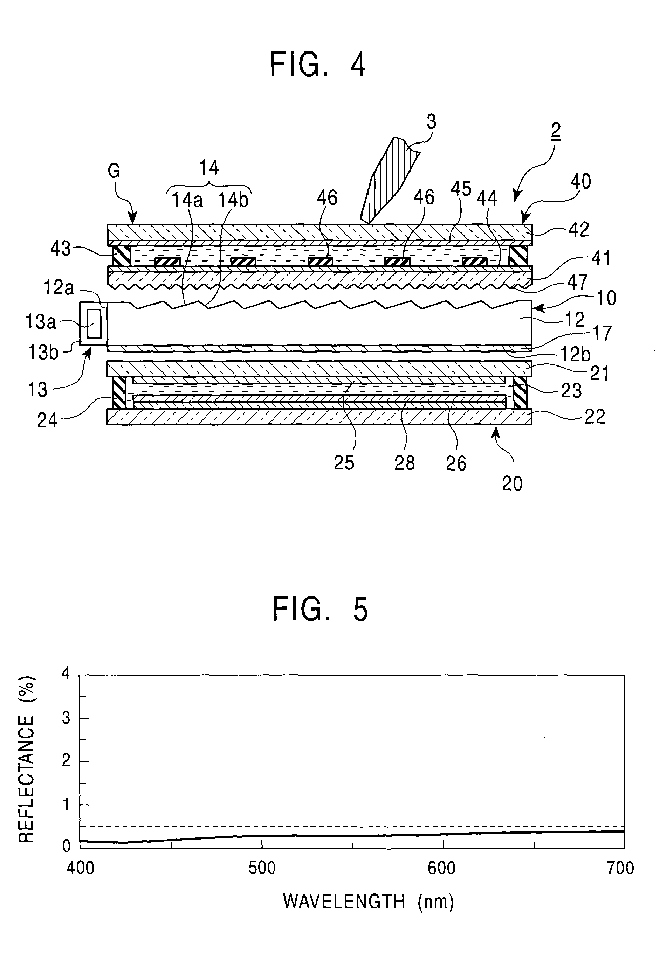

A liquid crystal display including a tablet according to the present invention will now be described. Fig. 4 is a cross-sectional view of a liquid crystal display 2. The liquid crystal display 2 includes a reflective liquid crystal panel 20, a front light 10, which is disposed close to the front face of the liquid crystal panel 20, and a tablet 40 for inputting coordinates, the tablet 40 being disposed close to the front face of the front light 10. The liquid crystal panel 20 and the front light 10 in the liquid crystal display 2 have the same structures as the liquid crystal panel 20 and the front light 10 in the liquid crystal display 1.

Referring to Fig. 4, the tablet 40 includes a bottom substrate 41 and a top substrate 42, which are composed of, e.g., a transparent resin and have a flat plate shape when viewed from the top. The bottom substrate 41 and the top substrate 42 are stuck to each other, with insulating patterns 43 interposed therebetween on both outer sides of the bottom substrate 41 and the top substrate 42. A bottom transparent conductive film 44 is disposed on the inner surface of the bottom substrate 41 and a top transparent conductive film 45 is disposed on the inner surface of the top substrate 42. The bottom transparent conductive film 44 and the top transparent conductive film 45 are composed of ITO and wiring pattern is formed therein. A plurality of insulating dot spacers 46 is disposed on the bottom transparent conductive film 44 at a predetermined distance and a space is provided between each dot spacer 46 and the top transparent conductive film 45.

For operating the tablet 40, a voltage capable of forming a potential distribution is applied to the bottom transparent conductive film 44 and the top transparent conductive film 45 in the tablet 40. As the operator pushes the surface of the top substrate 42 by an input member 3 such as a pen or a finger or slides the input member 3 over the surface of the top substrate 42, a flexible depression layer of the top substrate 42 is depressed. When the tablet 40 is not operated, the bottom transparent conductive film 44 and the top transparent conductive film 45 are separated by the dot spacers 46. When the depression layer is depressed, the depression layer of the top transparent conductive film 45 comes into contact with the bottom transparent conductive film 44. Thus, a signal corresponding to the depressed point of the depression layer is output from the bottom transparent conductive film 44, for example.

In a case where a voltage is applied to the top transparent conductive film 45, when the top transparent conductive film 45 comes into contact with the bottom transparent conductive film 44, a signal corresponding to the depressed point of the depression layer is output from the top transparent conductive film 45. Accordingly, by crossing the direction of the potential distribution for the bottom transparent conductive film 44 and the direction of the potential distribution for the top transparent conductive film 45, two-dimensional coordinates of the input member 3 on the top substrate 42 are obtained based on the outputs from the bottom transparent conductive film 44 and the top transparent conductive film 45.

Accordingly, the operator can input coordinates, namely, select an object such as an item from a menu displayed on the liquid crystal panel 20 using the tablet 40. More specifically, an object displayed on the liquid crystal panel 20 is selected by depressing the point corresponding to the object on the surface of the top substrate 42 by the input member 3.

An antireflective layer 47 is disposed on the bottom surface of the bottom substrate 41 in the tablet 40. On the antireflective layer 47, minute projections (depressions) of submicron order are disposed in a staggered arrangement parallel to the direction in which a light beam travels through the light-guide plate 12 or parallel to the vertical direction of a display region G in a tablet 40 when viewed by the viewer. The antireflective layer 47 has the same structure as that of the antireflective layer 37 in the liquid crystal display 1 shown in Fig. 1.

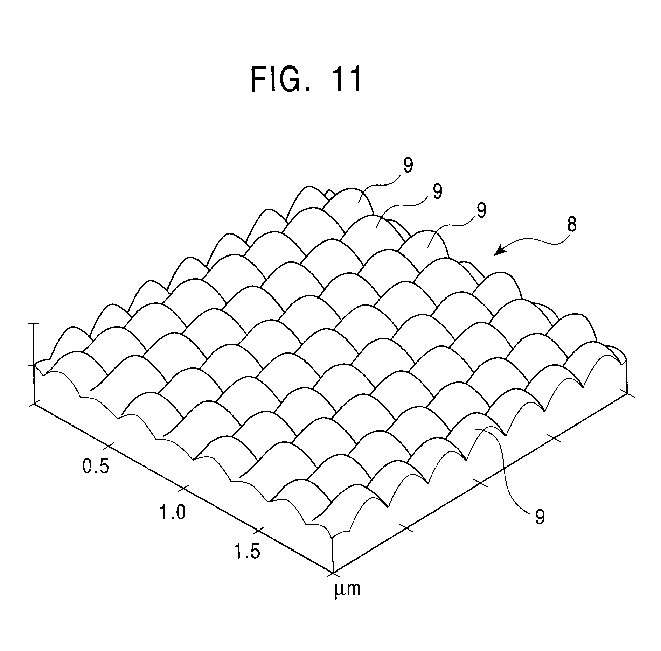

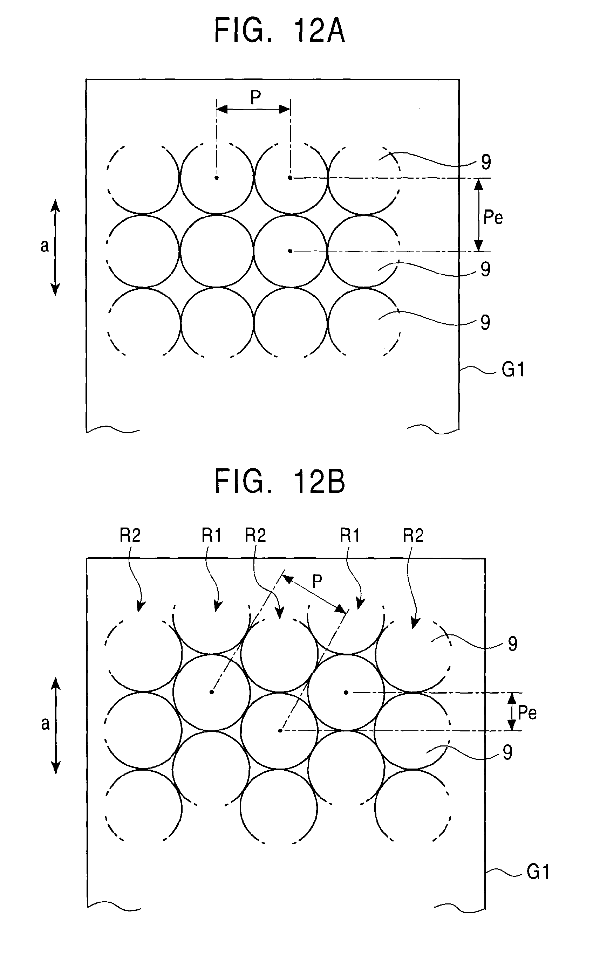

With regard to the arrangement of the minute projections (depressions), it was mentioned above that the staggered arrangement is parallel to the vertical direction of the display region G when viewed by the viewer. In other words, projections 9 shown in Fig. 11 are disposed in a staggered arrangement when viewed from the top, as shown in Fig. 12B. A first row R1 consists of projections 9 aligned at a predetermined pitch along the vertical direction of the display region G when viewed by the viewer (the direction designated by an arrow a in Fig. 12B). A second row R2 consists of projections 9 aligned at a predetermined pitch along the vertical direction of the display region G. The first row R1 and the second row R2 are alternately disposed side-by-side in the display region G when viewed by the viewer. The projections 9 in the first row R1 and the second row R2 constitute the staggered arrangement. The projections 9 in the first row R1 and the projections 9 in the second row R2 are arranged at a smallest effective pitch Pe that is smaller than the pitch at which the projections 9 are arranged vertically in the first row R1 and the second row R2. In Figs. 12A and 12B, square frames G1 with a shape similar to the display region G are illustrated in order to facilitate understanding of the relationship between the display region G and the aforementioned arrangement of the projections 9.

The direction in which the effective pitch Pe is minimized is parallel to the vertical direction of the display region G so that the possibility of occurrence of reflected light is even lower in the antireflective layer 47. According to the tablet 40 of the present invention, a transmitted or reflected light beam does not become bluish when the display is viewed from the oblique direction so that the liquid crystal panel 20 exhibits excellent color reproduction.

The pitch of the projections or depressions disposed in a staggered arrangement is preferably 0.3 µm or smaller. The effective pitch Pe of the projections or depressions disposed in a staggered arrangement is preferably 0.15 µm or smaller. If the pitch exceeds 0.3 µm, colored light is perceived when the tablet 40 is viewed from the oblique direction. According to the tablet 40 of the present embodiment, the effective pitch Pe of the projections 9 in the vertical direction of the display region G (the direction designated by the arrow a in Figs. 12A and 12B) is preferably 0.15 µm or smaller. With this range of pitches, the effect of preventing reflection in the antireflective layer 47 is enhanced, leading to an improvement in display quality of the liquid crystal display. If the effective pitch Pe exceeds 0.15 µm, the effect of preventing reflection is reduced in the antireflective layer 47.

Preferably, the height of each projection 9 is 0.2 µm or larger. If the height of each projection 9 is smaller than 0.2 µm, reflection is not sufficiently prevented, resulting in a higher reflectance. As the pitch of the projections 9 decreases, the transmittance of the antireflective layer 47 increases. It is, however, difficult to accurately fabricate extremely minute projections 9 of 0.2 µm or smaller with resin and to align them by current manufacturing techniques, thereby increasing costs. When the bottom substrate 41 is formed with resin, the practical lower limit of the pitch of the projections 9 is approximately 0.2 µm.

In the antireflective layer 47 with the structure described above, hardly any light is reflected. When a light beam is incident on the antireflective layer 47, the -1-st order reflected blue light with a short wavelength is suppressed. Therefore, transmitted light does not become bluish so that the liquid crystal display 2 exhibits excellent color reproduction. Since the antireflective layer 47 is provided, hardly any ambient light or illumination light incident on the tablet 40 is reflected at the bottom surface of the bottom substrate 41. Thus, display on the liquid crystal panel 20 is well perceived. Furthermore, since hardly any light is reflected at the bottom surface of the tablet 40, a washed-out phenomenon which occurs when ambient light reflected at the bottom substrate 41 of the tablet 40 reaches the operator is suppressed, thereby improving the contrast and display quality of the liquid crystal panel 20.

The antireflective layer 47 transmits a light beam reflected at the liquid crystal panel 20 toward the tablet 40 at a high transmittance, whereby the liquid crystal display exhibits excellent luminance. If a reflection light beam from the liquid crystal panel 20 is reflected by the bottom substrate 41 at the tablet 40, the light for display is partly lost, resulting in reduced luminance. Furthermore, due to the reflection at the bottom substrate 41, the liquid crystal display becomes washed out, thereby degrading the display contrast. According to the tablet 40 of the present invention, the antireflective layer 47 prevents the aforementioned phenomena.

According to the liquid crystal display 2 of the present embodiment, ambient light is used for a reflective display in an environment where ambient light is abundant, whereas illumination light emitted from the emitting face 12b of the light-guide plate 12 is used for display in an environment where ambient light is scare.

According to the liquid crystal display 2, the antireflective layer 47 is provided on the entire bottom surface of the bottom substrate 41 at the tablet 40, leakage of light supplied to the light-guide plate 12 from the light source 13 is suppressed. Thus, the problem of the display appearing bluish when the liquid crystal display 2 is viewed from the oblique direction is prevented. Furthermore, in a case where reflective display is performed using ambient light, hardly any ambient light from above the tablet 40 is reflected at the antireflective layer 47 when the light beam is emitted toward the front light 10. Thus, the amount of light entering the liquid crystal panel 20 is increased, whereby the liquid crystal display exhibits excellent luminance.

The light beam incident on the liquid crystal panel 20 is reflected by the reflection layer 26 of the bottom substrate 22 and reenters the light-guide plate 12. Then, the light beam passes through the light-guide plate 12 and the tablet 40 and reaches the operator. According to the liquid crystal display 2 of the present embodiment, thanks to the antireflective layer 47 provided on the entire bottom surface of the bottom substrate 41, hardly any reflection light from the liquid crystal panel 20 is reflected by the bottom surface of the tablet 40 and most of the light reaches the operator. Accordingly, since the light is not reflected by the bottom surface of the tablet 40, the luminance of the display is not decreased, leading to a bright display with high contrast.

Examples of the present invention will now be described in detail.

### Example 1

A mold with a cavity having depressions corresponding to the projections to be formed on a front cover was prepared. A wall of the mold corresponding to the bottom surface of the front cover was patterned with an electron beam lithography system and then was etched, whereby a plurality of depressions were formed on the wall corresponding to the bottom surface of the front cover. The depressions formed on the mold were disposed in the staggered arrangement and the pitch of the depressions was 0.25 µm and the depth of the depressions was 0.25 µm.

Subsequently, an acrylic resin was injected into the mold to prepare a front cover with dimensions of 40 mm in width, 50 mm in length, and 0.8 mm in thickness, where an antireflective layer was formed on the bottom surface thereof. The bottom surface of the front cover was measured by atomic force microscopy (AFM). Minute projections with heights of 0.23 µm to 0.24 µm were uniformly formed at a pitch of 0.25 µm in the staggered arrangement.

Next, the reflectance of the bottom surface of the front cover was measured. The results are shown in Fig. 5. In the wavelength range from 400 nm to 700 nm, the reflectance was smaller than 0.5%. This showed that the bottom surface of the front cover had a reflection-preventing function. Another front cover was fabricated as a comparative example under the same conditions except that no antireflective layer was provided on the bottom surface of the front cover. The observed reflectance of the bottom surface according to the comparative example was 4% to 5%.

### Example 2

To determine the effect of the pitch size of the projections provided on the antireflective layer on the reflection-preventing function, three front covers having antireflective layers in which projections were formed at different pitches were fabricated as in example 1. Specifically, the pitches of the depressions in cavities of three molds were 0.25 µm, 0.3 µm, and 0.4 µm. Injection molding was performed using these molds to fabricate the three different kinds of front cover.

The bottom surfaces of the front covers were measured by AFM. The pitches of the projections were 0.25 µm, 0.3 µm, and 0.4 µm, respectively, and the heights of the projections were 0.25 µm to 0.27 µm for all three front covers. A front light was disposed in front of each front cover on the side close to the antireflective layer. Each front light was provided with a rod light source on the side face thereof that is close to a light-guide plate, the light source having white light emitting diodes on both sides thereof.

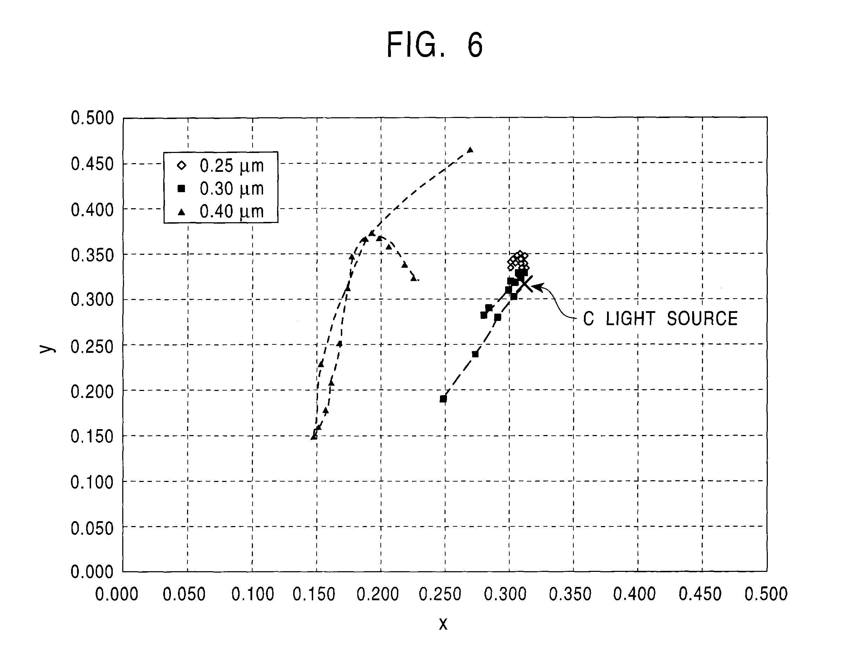

Next, each front light was turned on and a detector was shifted on the plane along the direction in which light traveled in the light-guide plate in order to detect leaking light within the tilt angle ranging from -30° to 30° with respect to the normal line to the light-guide plate, where the tilt angle of the light was negative for the side face provided with the light source or positive for the opposite side. Fig. 6 is an x-y chromaticity diagram of the results where a white C light source is represented by x.

As shown in Fig. 6, for the front cover having projections with a 0.25-µm pitch and the front cover having projections with a 0.3-µm pitch, the chromaticity of leaking light had low angular dependency and the chromaticities were distributed close to that of the C light source. The results show that when the front light and the front cover were disposed in front of the liquid crystal panel, hardly any unnecessary colored light was perceived from the oblique direction with respect to the display and thus the liquid crystal panel exhibited excellent color reproduction. According to the front cover having projections with a 0.25-µm pitch, the chromaticity distribution was smaller and thus less colored light was perceived as compared to the front cover having projections with a 0.3-µm pitch. Accordingly, the front cover having the projections with a 0.25-µm pitch has superior color reproduction than the front cover having the projections with a 0.3-µm pitch. For the front cover having the projections with a 0.4-µm pitch, the chromaticities were remote from that of the C light source and the chromaticity distribution was large. Therefore, leaking light was colored and the color of this colored leaking light differed depending on the angle. Thus, the front cover having the projections with a 0.4-µm pitch has lower color reproduction than the front covers having the projections with a 0.25-µm pitch and 0.3-µm pitch.

### Example 3

To examine the effect of the difference in arrangement of the projections on the antireflective layer, two front covers in which the projections were differently arranged were fabricated. Except for the arrangement of the projections, the front covers had the same structures.

First, a mold having a cavity in which depressions were disposed in the normal arrangement on the wall thereof and a mold having a cavity in which depressions were disposed in the staggered arrangement on the wall thereof were prepared. In each mold, the pitch of the depressions was 0.3 µm and the depth of the depressions was 0.3 µm. Subsequently, front covers were formed by injection molding using these molds. The bottom surfaces of the front covers were measured by AFM. The minute projections were disposed in the normal arrangement and the staggered arrangement, respectively, with a pitch of 0.3 µm and heights ranging from 0.27 µm to 0.29 µm.

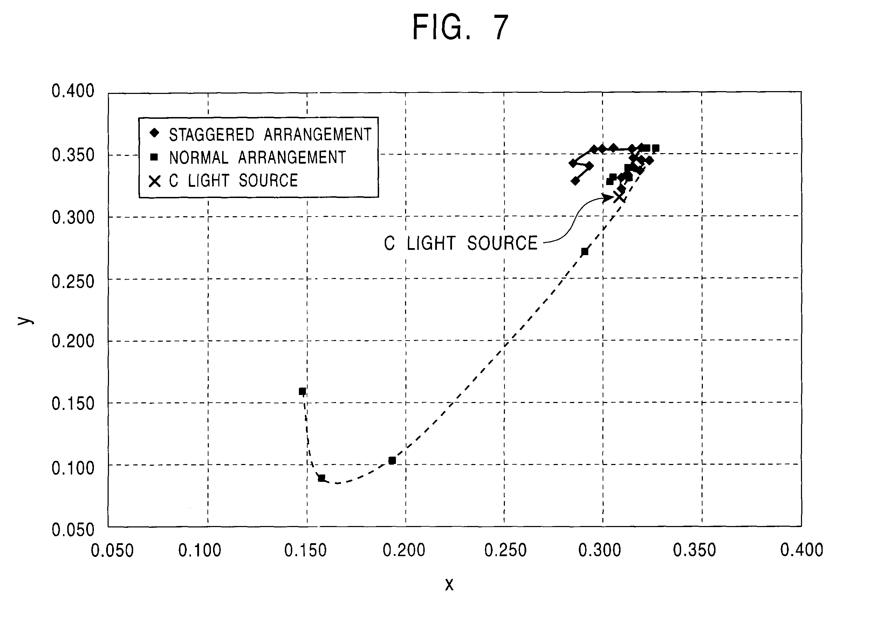

Next, a front light with a light-guide plate having a rod light source on the side face thereof was provided close to the antireflective layer of each front cover fabricated as described above. Each front light was turned on and the chromaticity of the leaking light was measured as in example 2. Fig. 7 shows the results. As shown in Fig. 7, according to the front cover with the projections disposed in the staggered arrangement, the chromaticity distribution was smaller, the chromaticities were distributed closer to that of the C light source, and less colored light was perceived, as compared to the front cover with the projections disposed in the normal arrangement. According to the front cover with the projections disposed in the normal arrangement, the chromaticities measured at large angles were distributed remote from that of the C light source. So when the display is viewed from the front of the front cover, hardly any unnecessary colored leaking light is perceived. However, when the display is viewed from an oblique direction, unnecessary colored light is probably perceived and thus the displayed color is slightly changed.

### Example 4

To examine how the relationship between the main light-traveling direction in the light-guide plate and the direction along which the projections are arranged on the antireflective layer affects the reflection-preventing function of the front cover, two front covers having antireflective layers in which projections were arranged in different directions were prepared as in example 1. In each front cover, the pitch of the projections was 0.25 µm and the heights of the projections were from 0.3 µm to 0.24 µm.

A front cover in which the projections were arranged so as to be parallel to the main light-traveling direction in the light-guide plate and a front cover in which the projections were arranged so as to be orthogonal to the main light-traveling direction were fabricated. The effective pitch of the former front cover in the main light-traveling direction was 0.125 µm and the effective pitch of the latter front cover was 0.217 µm. That is, according to the arrangement of the former front cover, the projections on the antireflective layer were arranged such that the effective pitch was minimized in the main light-traveling direction in the light-guide plate.

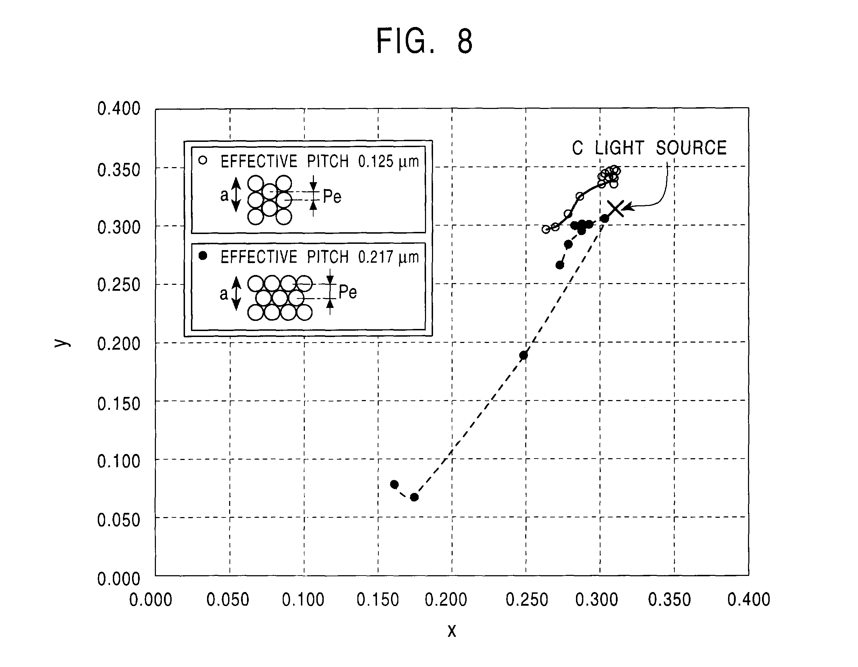

Next, a front light with a light-guide plate having a rod light source on the side face of the light-guide plate was provided close to the antireflective layer of each front cover fabricated as described above. Each front light was turned on and the chromaticity was measured as in example 2. Fig. 8 shows the results. As shown in Fig. 8, according to the front cover including the antireflective layer having the projections with the effective pitch of 0.125 µm, which is the minimum effective pitch in the main light-traveling direction, the chromaticities were distributed closer to that of the C light source, less colored leaking light was perceived, and the variation in chromaticity was smaller when the display was viewed in an oblique direction, as compared to the front cover including the antireflective layer having the projections with the effective pitch of 0.217 µm. On the other hand, according to the front cover having the antireflective layer with the projections at the effective pitch of 0.217 µm, when the display was viewed from the front, the chromaticities were distributed close to that of the C light source and thus hardly any unnecessary colored light was perceived. However, when the display was viewed from an oblique direction, leaking colored light was perceived.

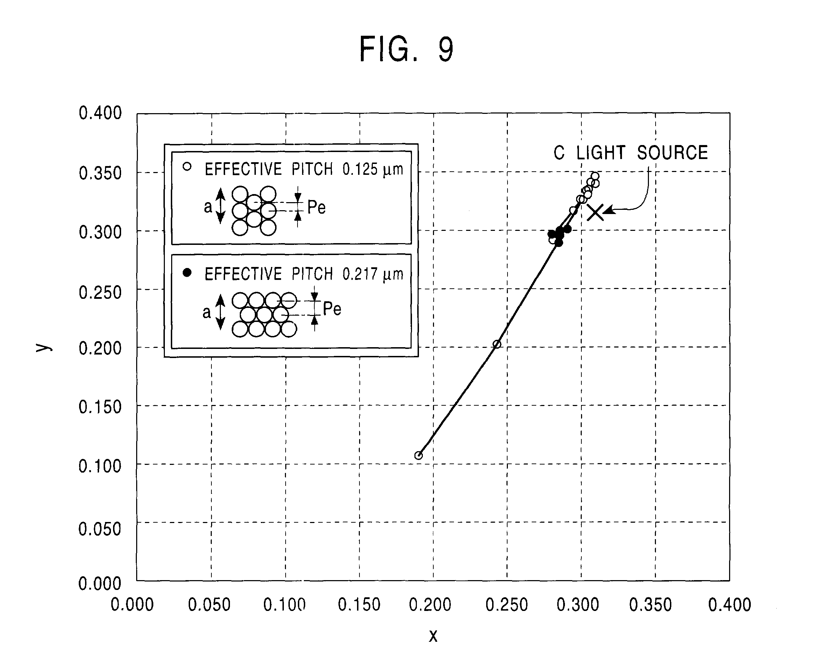

The chromaticity of the aforementioned two front covers was measured on the plane orthogonal to the main light-traveling direction in the light-guide plate. The angular dependency of leaking light towards the direction parallel to the side face of the light-guide plate was examined. The measurement angles were from -30° to 30°. Referring to Fig. 9, unlike the chromaticity distribution measured on the plane parallel to the main light-traveling direction, on the plane orthogonal to the main light-traveling direction, the chromaticity distribution of the front cover with the effective pitch of 0.217 µm was larger than that of the front cover with the effective pitch of 0.217 µm. Light leaking towards the direction parallel to the side face of the light-guide plate is a reflection of the light incident on the light-guide plate almost vertical to the main light-traveling direction. With respect to this reflected light, the pitch along the direction orthogonal to the traveling light is smaller in the arrangement at the effective pitch of 0.217 µm than in the one at the effective pitch of 0.125 µm. However, when the light-guide plate is used with the liquid crystal panel, it is important that the chromaticity distribution in the vertical direction when viewed by the viewer be small. In practice, it is unlikely that the chromaticity distribution in the lateral direction of the display becomes a problem. Therefore, when the rod light source is disposed at the top or bottom of the light-guide plate when viewed by the viewer, it is preferable to use the front cover including the antireflective layer with the projections arranged at the minimum effective pitch.

These results confirmed that colored leaking light can be suppressed by minimizing the effective pitch of the projections on the reflective-preventive layer in the main light-traveling direction in the light-guide plate. Furthermore, the results in Figs. 8 and 9 show that when the effective pitch of the projections on the antireflective layer is smaller than 0.15 µm, the chromaticity can be made close to that of the C light source. In practice, however, it is difficult to form the projections in the normal arrangement at a pitch of 0.15 µm by current molding techniques. According to the present invention, the projections are disposed in the staggered arrangement on the bottom surface of the front cover so that the front cover of the present invention can achieve the same properties as the front cover in which projections are arranged at a smaller pitch. Hence, the front cover of the present invention has advantages in terms of effective fabrication and reduced costs.

### Example 5

To compare an antireflective layer with a known layered structure and the antireflective layer according to the present invention, a front cover having an antireflective layer with a known layered structure was fabricated as a comparative example. Specifically, a front cover with no irregularities provided on the bottom surface thereof was fabricated by injection molding. The antireflective layer was fabricated by alternately laminating SiO₂ layers and TiO₂ layers periodically by vacuum deposition on the bottom surface of the front cover. A front light including a rod light source on the side face thereof was disposed close to the antireflective layer of the front cover, thereby obtaining an illumination device of a comparative example.

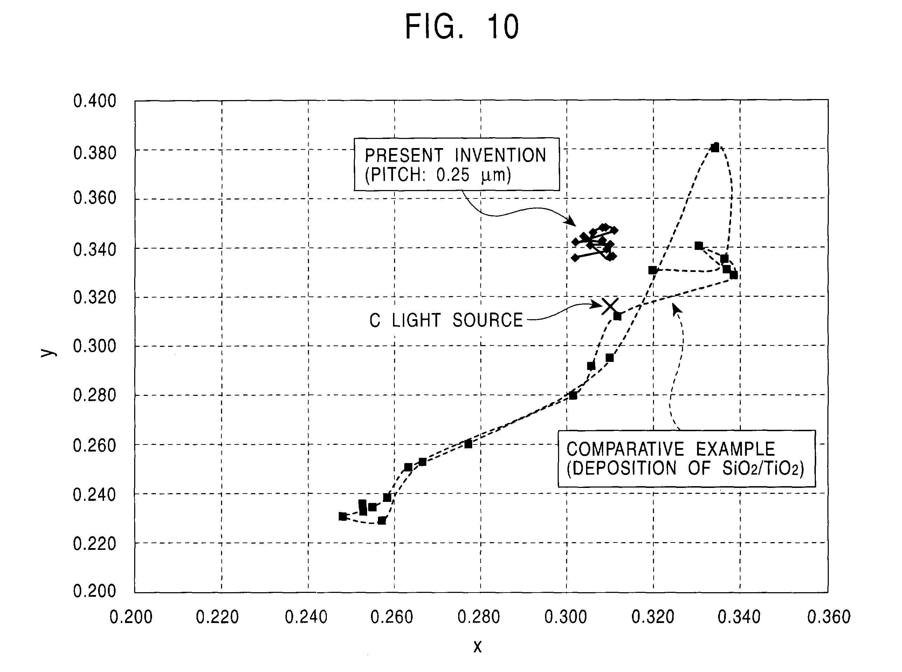

The front light in the illumination device of the comparative example was turned on and the chromaticity was measured as in example 2. Fig. 10 shows the results. Fig. 10 also includes the chromaticity of the illumination device according to the present invention, for comparison. This illumination device of the present invention was fabricated in example 2 and had the antireflective layer including the projections arranged at a pitch of 0.25 µm. As shown in Fig. 10, according to the illumination device of the comparative example, the chromaticity distribution was large and colored leaking light was perceived at certain angles, which implies that color reproduction would be greatly degraded in the oblique direction when used with a liquid crystal panel. Thus, the liquid crystal display including the illumination device and the liquid crystal panel of the present invention provides a wider viewing angle than the liquid crystal display of the known type.

### Example 6

A mold having a cavity with depressions corresponding to the projections to be formed on the bottom substrate shown in Fig. 11 was prepared. A wall corresponding to an emitting surface of a light-guide plate was patterned with an electron beam lithography system and then was etched, thereby forming a plurality of depressions on the wall of the mold. The depressions were disposed in the staggered arrangement and the pitch of the depressions was 0.25 µm and the depth of the depressions was 0.25 µm.

Subsequently, an acrylic resin was injected into the mold to prepare a bottom substrate with dimensions of 40 mm in width, 50 mm in length, and 0.8 mm in thickness, where an antireflective layer was disposed on the bottom surface thereof. The bottom surface of the bottom substrate was measured by atomic force microscopy (AFM). Minute projections with heights ranging from 0.23 µm to 0.24 µm were uniformly formed at a pitch of 0.25 µm in the staggered arrangement.

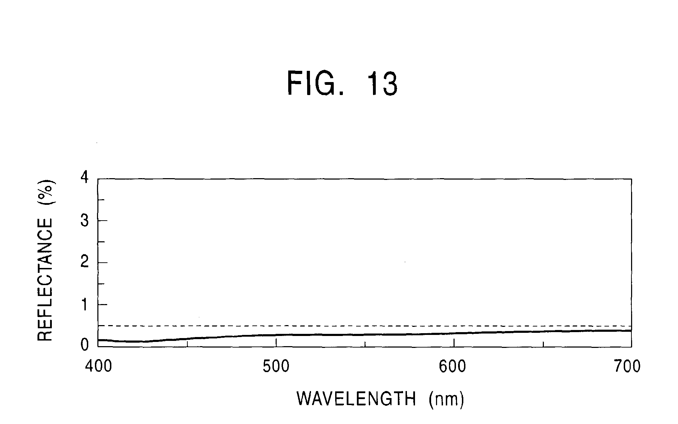

Next, the reflectance of the bottom surface of the bottom substrate was measured. The measurement results are shown in Fig. 13. In the wavelength range from 400 nm to 700 nm, the reflectance was smaller than 0.5%. This showed that the bottom surface of the bottom substrate had a reflection-preventing function. Another front cover having a bottom surface was fabricated as a comparative example under the same conditions except that no antireflective layer was provided. The observed reflectance of the bottom surface of the front cover according to the comparative example was 4% to 5%.

### Example 7

To determine how the size of the pitch of the projections provided on the antireflective layer on the bottom substrate affects the reflection-preventing function, three bottom substrates having antireflective layers where projections were formed at different pitches were fabricated as in example 1. Specifically, the pitches of the depressions in cavities of three molds were 0.25 µm, 0.3 µm, and 0.4 µm, respectively. Injection molding was performed using these three molds, thereby obtaining three different kinds of bottom substrate.

The bottom surfaces of the bottom substrates were measured by AFM. The pitches of the projections on the three bottom substrates were 0.25 µm, 0.3 µm, and 0.4 µm, respectively, and the heights of the projections were in the range of 0.25 µm to 0.27 µm for all three bottom substrates. Plate-shaped top substrates were formed of the same material as the bottom substrates. There were no irregularities provided on the top substrates. Rectangular transparent electrodes composed of ITO were disposed on the bottom surfaces of the top substrates and the top surfaces of the bottom substrates. Dot spacers with dimensions of 8 µm in height, 50 µm in width, and 50 µm in length were formed at a pitch of 2 mm on the top surfaces of the bottom substrates. The top substrates and the bottom substrates were assembled. The inside of the assembled top and bottom substrates were filled with flame-shaped insulating spacers, thereby obtaining three kinds of tables.

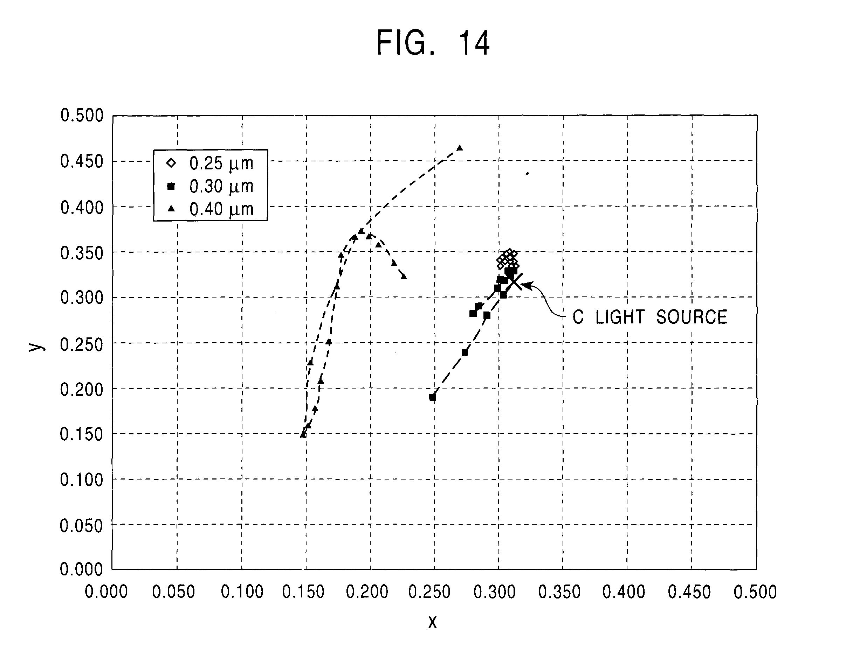

The chromaticity of leaking light on these bottom substrates was measured on the plane along the vertical direction of the display regions in the bottom substrates by varying angles of the detector in the range from -30° to 30°. Fig. 14 is an x-y chromaticity diagram of the results, where a white C light source is represented by x.

As shown in Fig. 14, for the bottom substrate having the projections arranged at the 0.25-µm pitch and the bottom substrate having the projections arranged at the 0.3-µm pitch, the chromaticity of leaking light had low angular dependency and the chromaticities were distributed close to that of the C light source. The results show that when the front light and the tablet were disposed in front of the liquid crystal panel in the liquid crystal display, unnecessary colored light was not perceived from the oblique direction with respect to the display and thus the liquid crystal panel exhibited excellent color reproduction. According to the tablet with the bottom substrate having the projections arranged at the pitch of 0.25 µm, the chromaticity distribution was smaller and thus less colored light was perceived, thereby exhibiting superior color reproduction than the front cover having the projections arranged at the pitch of 0.3 µm. For the bottom substrate having the projections arranged at the pitch of 0.4 µm, the chromaticities were remote from that of the C light source and the chromaticity distribution was large, so the leaking light was colored. Thus, the bottom substrate having the projections arranged at the pitch of 0.4 µm has lower color reproduction than the bottom substrates with the projections at the pitch of 0.25 µm and the projections at the pitch of 0.3 µm.

### Example 8

To examine the effect of the difference in arrangement of the projections on the antireflective layer of the bottom substrate, two bottom substrates in which projections were differently arranged were fabricated.

First, a mold having a cavity in which depressions were disposed in the normal arrangement on the wall thereof and a mold having a cavity in which depressions were disposed in the staggered arrangement on the wall thereof were prepared. In each mold, the pitch of the depressions was 0.3 µm and the depth of the depressions was 0.3 µm. Subsequently, bottom substrates were formed by injection molding using these molds. The bottom surfaces of the bottom substrates were measured by AFM. The minute projections were disposed in the normal arrangement and the staggered arrangement, respectively, with a pitch of 0.3 µm and heights ranging from 0.27 µm to 0.29 µm.

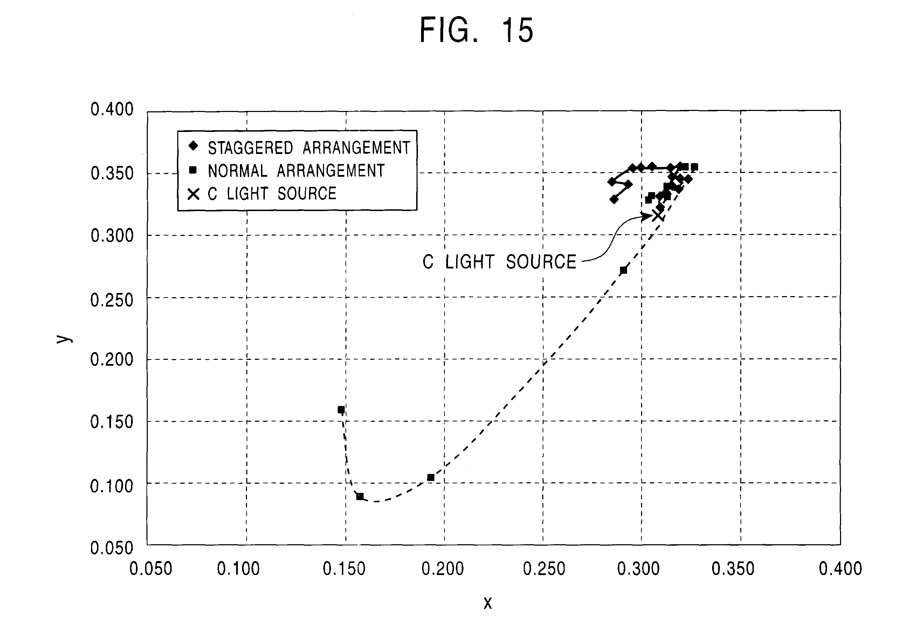

Next, with regard to the tablets including the bottom substrates fabricated as described above, the chromaticity of leaking light was measured as in example 2. Fig. 15 shows the results. As shown in Fig. 15, according to the tablet including the bottom substrate with the projections disposed in the staggered arrangement, the chromaticity distribution was smaller and the chromaticities were distributed closer to that of the C light source so that less colored light was perceived, as compared to the tablet with the projections disposed in the normal arrangement. According to the tablet with the projections disposed in the normal arrangement, the chromaticities measured at large angles were distributed remote from that of the C light source. So when the display is viewed from the front of the front cover, hardly any unnecessary colored leaking light is perceived. However, when the display is viewed from an oblique direction, unnecessary colored light is probably perceived and thus the displayed color is slightly changed.

### Example 9

To examine how the relationship between the vertical direction of the display in the tablet and the direction along which the projections are arranged on the antireflective layer affects the reflection-preventing function of the tablet, two tablets having antireflective layers in which the projections were arranged in different directions were fabricated as in example 1. In each tablet, the pitch of the projections was 0.25 µm and the depths of the projections were from 0.23 µm to 0.24 µm.

A tablet having a bottom substrate in which the projections were arranged so as to be parallel to the vertical direction of the display and a tablet having a bottom substrate in which the projections were arranged so as to be orthogonal to the vertical direction of the display were fabricated. In the former tablet, the effective pitch of the projections on the bottom substrate in the vertical direction of the display was 0.125 µm, which is the minimum effective pitch in the vertical direction of the display, and in the latter tablet, the effective pitch of the projections on the bottom substrate was 0.217 µm. That is, according to the former arrangement, the projections on the antireflective layer were arranged such that the effective pitch was minimized in the vertical direction of the display in the tablet.

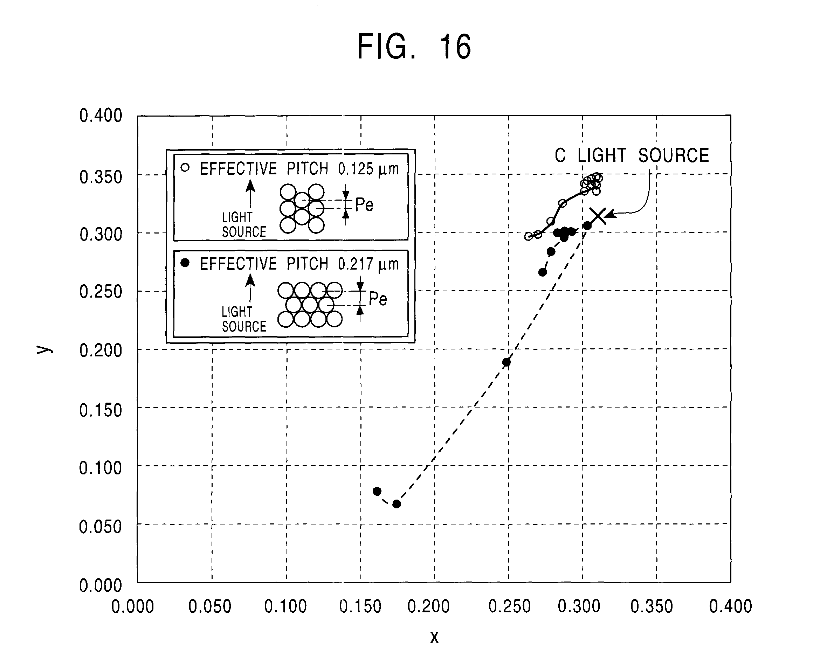

Next, a front light and a liquid crystal panel were disposed below each of the tablets. The front lights were turned on and chromaticity was measured as in example 2. Fig. 16 shows the results. As shown in Fig. 16, according to the tablet having the antireflective layer including the projections arranged at the effective pitch of 0.125 µm, the chromaticities were distributed closer to that of the C light source, less colored light was perceived, and the variation in chromaticity was smaller when the display was viewed from an oblique direction, as compared to the tablet having the antireflective layer including the projections arranged at the effective pitch of 0.217 µm. On the other hand, according to the tablet having the antireflective layer including the projections arranged at the effective pitch of 0.217 µm, when the display was viewed from the front, the chromaticities were distributed close to that of the C light source and thus hardly any unnecessary colored light was perceived. However, when the display was viewed from an oblique direction, leaking colored light was perceived.

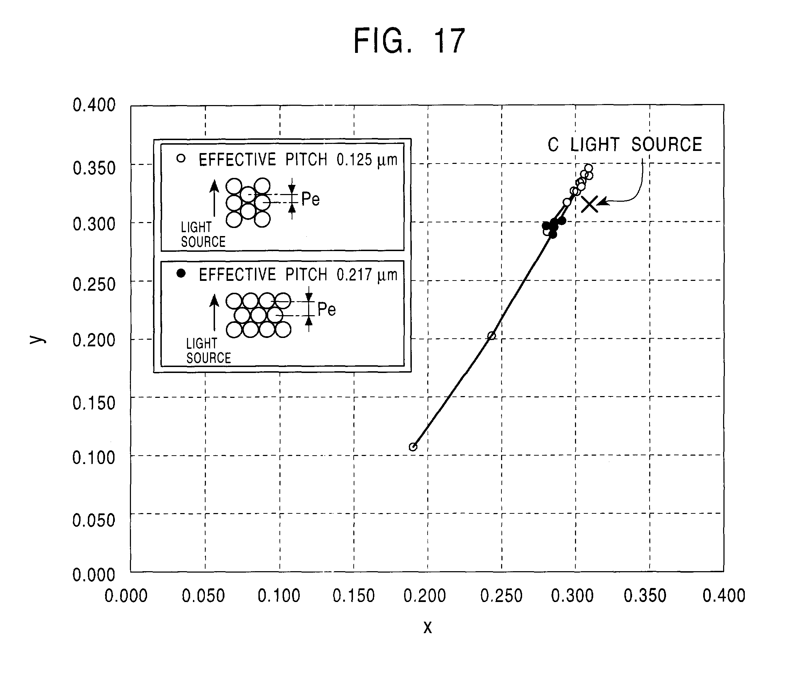

The chromaticity of the two tablets was measured along the plane orthogonal to the vertical direction of the display in the bottom substrate. The angular dependency of leaking light in the direction parallel to the lateral direction of the display in the bottom substrate was examined. The measurement angles were -30° to 30°. Referring to Fig. 17, unlike the chromaticity distribution measured on the plane parallel to the vertical direction of the display, on the plane orthogonal to the vertical direction of the display, the chromaticity distribution of the bottom substrate with the projections at the effective pitch of 0.125 µm was larger than that of the bottom substrate with the projections at the effective pitch of 0.217 µm. Light leaking in the lateral direction of the bottom surface is a reflection of the light incident on the bottom substrate almost vertical to the vertical direction of the display. With respect to this reflected light, the pitch along the direction orthogonal to the traveling light was smaller in the arrangement with the effective pitch of 0.217 µm than in the one with the effective pitch of 0.125 µm. However, when the tablet is used with the liquid crystal panel, it is important that the chromaticity distribution in the vertical direction when viewed by the viewer be small. In practice, it is unlikely that the chromaticity distribution in the lateral direction in the display becomes a problem. Therefore, it is preferred to use the tablet including the bottom substrate having the projections arranged at the minimum effective pitch in the vertical direction of the display.

These results confirmed that colored leaking light can be suppressed by minimizing the effective pitch of the projections in the vertical direction of the display. Furthermore, the results in Figs. 16 and 17 show that when the effective pitch of the projections on the antireflective layer is smaller than 0.15 µm or smaller, the chromaticities can be made close to that of the C light source. In practice, however, it is difficult to form projections at a pitch of 0.15 µm in the normal arrangement with resin by molding. According to the present invention, the projections are disposed in the staggered arrangement on the bottom substrate so that the tablet of the present invention can achieve the same properties as the tablets in which projections are arranged at a smaller pitch. Hence, the tablet of the present invention has advantages in terms of effective fabrication and reduced costs.

### Example 10

To compare an antireflective layer of a known layered structure with the antireflective layer according to the present invention, an antireflective layer of a known layered structure was fabricated as a comparative example. Specifically, a bottom substrate with no irregularities was fabricated by injection molding. The antireflective layer was fabricated by alternately laminating SiO₂ layers and TiO₂ layers periodically by vacuum deposition on the bottom surface of the bottom substrate. A tablet of the comparative example including the bottom substrate fabricated as described above was disposed above a front light on the liquid crystal panel.

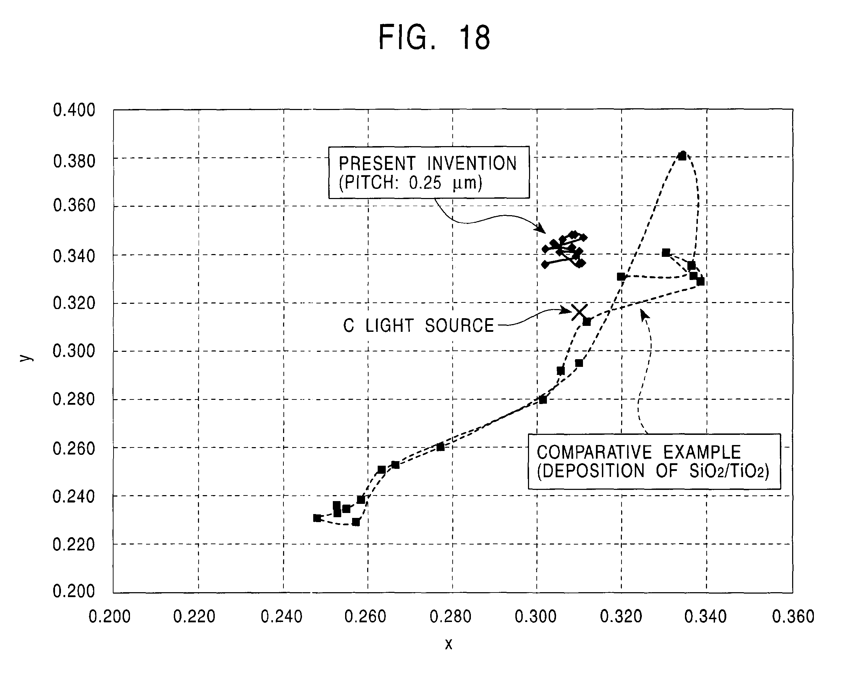

The front light provided in the tablet of the comparative example was turned on and the chromaticity was measured as in example 2. Fig. 18 shows the results. Fig. 18 also includes the chromaticity of the tablet including the antireflective layer of the present invention, for comparison. This antireflective layer of the present invention was fabricated in example 2 and had the projections arranged at the pitch of 0.25 µm. As shown in Fig. 18, according to the tablet of the comparative example, the chromaticity distribution was large and colored leaking light was perceived at certain angles, which implies that color reproduction would be greatly degraded in the oblique direction when used with a liquid crystal panel. Thus, the liquid crystal display including the tablet and the liquid crystal panel according to the present invention provides a wider viewing angle than the liquid crystal display of the known type.

## Claims

1. A transparent substrate having a surface having minute projections or depressions disposed in a staggered arrangement for preventing reflection of light, the transparent substrate being capable of transmitting light across the thickness thereof.

2. A tablet comprising:
a bottom substrate in which at least a display region is transparent, the bottom substrate having an inner surface and an outer surface;
a top substrate in which at least a display region is transparent, the top substrate having an inner surface, the bottom substrate and the top substrate facing each other with a predetermined gap;
a bottom transparent conductive film disposed on the inner surface of the bottom substrate;
a top transparent conductive film disposed on the inner surface of the top substrate; and
an antireflective layer having minute projections or depressions and disposed on the outer surface of the bottom substrate, the antireflective layer being capable of transmitting light across the thicknesses of the display regions of the top substrate and the bottom substrate, the projections or depressions being disposed in a staggered arrangement along the vertical direction of the display region of the bottom substrate when the display region is viewed by a viewer.

3. The tablet according to claim 2, wherein first rows consisting of the projections or depressions aligned at a predetermined pitch along the vertical direction of the display region and second rows consisting of the projections or depressions aligned at a predetermined pitch along the vertical direction of the display region are alternately disposed in the lateral direction when the display region is viewed by the viewer, and the staggered arrangement is composed of the projections or depressions in the first rows and the second rows,
wherein the smallest effective pitch is defined by the projections or depressions in the first rows and the projections or depressions in the second rows, the smallest effective pitch being smaller than the pitches at which the projections or depressions are aligned in the first rows and the second rows.

4. The tablet according to claim 3, wherein each of the pitch at which the projections or depressions are aligned in the first row and the pitch at which the projections or depressions are aligned in the second row is 0.3 µm or less.

5. The tablet according to claim 3, wherein the smallest effective pitch is 0.2 µm or less.

6. A liquid crystal display comprising the tablet as set forth in claim 2 and a liquid crystal panel disposed below the tablet.

7. An illumination device comprising:
a light source for emitting light;
a light-guide plate having a side face, a reflective face, and an emitting face, the reflective face and the emitting face facing each other; and
a front cover disposed closer to a viewer than the light source and the light-guide plate,
wherein the light emitted from the light source is supplied to the light-guide plate through the side face, and the light traveling through the light-guide plate is reflected by the reflective face and is emitted from the emitting face,
wherein the front cover includes a plate-shaped flat transparent substrate and an antireflective layer on an entire surface of the transparent substrate, the surface being close to the light-guide plate, the antireflective layer having minute projections or depressions that are disposed in a staggered arrangement parallel to a direction along which the light travels through the light-guide plate.

8. A liquid crystal display comprising the illumination device as set forth in claim 7 and a liquid crystal panel disposed below the illumination device.

9. A tablet comprising:
a light source for emitting light;
a light-guide plate having a side face, a reflective face, and an emitting face, the reflective face and the emitting face facing each other;
a bottom substrate in which at least a display region is transparent, the bottom substrate having an inner surface and an outer surface;
a top substrate in which at least a display region is transparent, the top substrate having an inner surface, the bottom substrate and the top substrate facing each other with a predetermined gap and being disposed closer to a viewer than the light source and the light-guide plate;
a bottom transparent conductive film disposed on the inner surface of the bottom substrate;
a top transparent conductive film disposed on the inner surface of the top substrate; and
an antireflective layer having minute projections or depressions and disposed on the outer surface of the bottom substrate,
wherein the light emitted from the light source is supplied to the light-guide plate through the side face, and the light traveling through the light-guide plate is reflected by the reflective face and is emitted from the emitting face,
wherein the antireflective layer is capable of transmitting light across the thicknesses of the display regions of the top substrate and the bottom substrate,
wherein the projections or depressions are disposed in a staggered arrangement parallel to a direction along which the light travels through the light-guide plate.

10. The tablet according to claim 9 or 7, wherein the projections or depressions are aligned at a pitch of 0.3 µm or less.

11. The tablet according to claim 9 or 7, wherein the projections or depressions are aligned at an effective pitch of 0.15 µm or less.

12. A liquid crystal display comprising the tablet as set forth in claim 11 and a liquid crystal panel disposed below the tablet.
